# EUROPEAN PATENT SPECIFICATION

(11) **EP 1 210 884 B1**
(45) Date of publication and mention of the grant of the patent: **03.11.2004**
(21) Application number: 02004460.8
(22) Date of filing: 19.04.2000
(51) Int. Cl.: G09F 3/00, G06K 19/04, G06K 13/00

(54) **Feeding device for transferring identification bracelets to a reading unit**
Vorrichtung zur Zuführung von Identifikationsarmbändern zu einem Lesegerät
Dispositif servant au transfert de bracelets d'identification vers une unité de lecture

(30) Priority: 22.04.1999 SI 9900099
(43) Date of publication of application: 05.06.2002
(62) Divisional of application: 00928102.3
(73) Proprietor: Metra Inzeniring D.O.O., 1000 Ljubljana (SI)
(72) Inventor: Cevc, Luka, 1000 Ljubljana (SI)
(74) Representative: Kohlmann, Kai, Dipl.-Ing.

(56) References cited:
- DE-A- 4 402 229
- US-A- 4 150 784
- US-A- 4 534 012
- US-A- 4 727 975
- US-A- 5 877 742

## Description

The present invention relates to a feeding device for transferring identification bracelets or similar annular attaching requisites equipped by electronic data carriers to appropriate unit for reading electronic data, whereas the bracelet or commonly such an attaching requisite comprises an electronic data carrier, e.g. a microprocessor or appropriate printed circuit, from which the data may be read by means of appropriate reading unit or reader.

US-A- 4 727 975 discloses a system for the unsupervised control of the use of lockers in bath houses or the like in which the locker doors are provided with a deposit lock. The locks are operated with codes such that the deposit locks can be brought into the position of readiness to receive a code and store the code and the memory is automatically erased upon the return of the deposit coin.

The present invention is grounded on the problem, how to conceive a feeding device for transferring identification bracelets or similar annular attaching requisites equipped by appropriate electronic data carrier to appropriate electronic data reader, so that just one-way collecting of the said bracelets or similar annular attaching requisites as well as positioning thereof in order to enable reliable reading of the electronic data should be ensured.

In order to simplify, in the following description and the claim language the term identification bracelet will be used exclusively. However it should be noted that the term bracelet means any attaching requisite either in form of a bracelet intended to use e.g. in swimming pools, or also e.g. in form of a collar for animals, or moreover like a watch-belt or moreover in general also like any other attaching or clamping requisite foreseen for attaching certain object around another object of at least cylindrical shape. Quite analogously, the term feeder will be used in order to characterize a device for feeding and transferring the bracelets to electronic data reading unit.
The stated technical problem has been successfully solved by means of a device for feeding bracelets or similar annular attaching requisites equipped by appropriate electronic data carrier and transferring them to the unit for reading electronic data according to the attached claims.

The said feeding device i.e. the said feeder comprises a housing onto which a cover is placed being driven by a motor and equipped by an antenna, while inside the said housing a pallet is arranged being equipped by a pivotable bottom and a circular antenna, by which both aforementioned motors for moving the cover and the pallet are electrically connected each to another in order to achieve their synchronized actuating.

Each bracelet or similar annular attaching requisite equipped by appropriate electronic data carrier comprises a storage which consists of an erosion and a cover, the said storage is intended for receipt of a microprocessor or any other corresponding assembly for memorizing and processing electronic data in order to enable identification of the bracelet.

The invention will now be described by means of an embodiment of the feeder including the corresponding identification bracelet as shown in the accompanied drawings, where
Fig. 1 schematically illustrates a feeder shown in its front view;
Fig. 2 is a top view of the feeder according to Fig. 1,

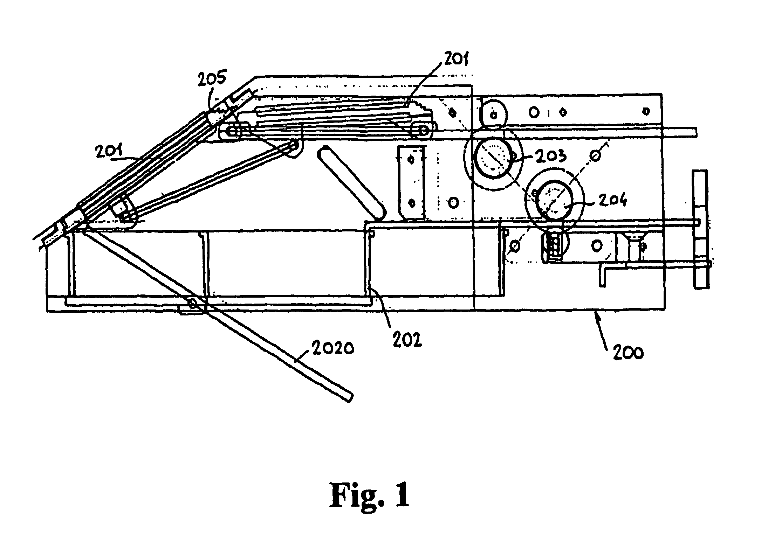

A feeder consists of a housing 200 over which a slidable cover 201 is placed, while inside the said housing there is a pallet 202 having a pivotable bottom 2020 which can be turned over in certain situation. The said cover 201 can be moved by means of a motor 203 and a corresponding mechanism, which are not separately shown in the enclosed drawing, which means from its left position with respect to Fig. 1 into its right position as illustrated in a symbolic manner in Fig. 1 by means of essentially thinner lines. Movement of the pallet 202 driven also by means of a motor 204 and a corresponding not-shown mechanism is synchronized with the said movement of the cover 201.

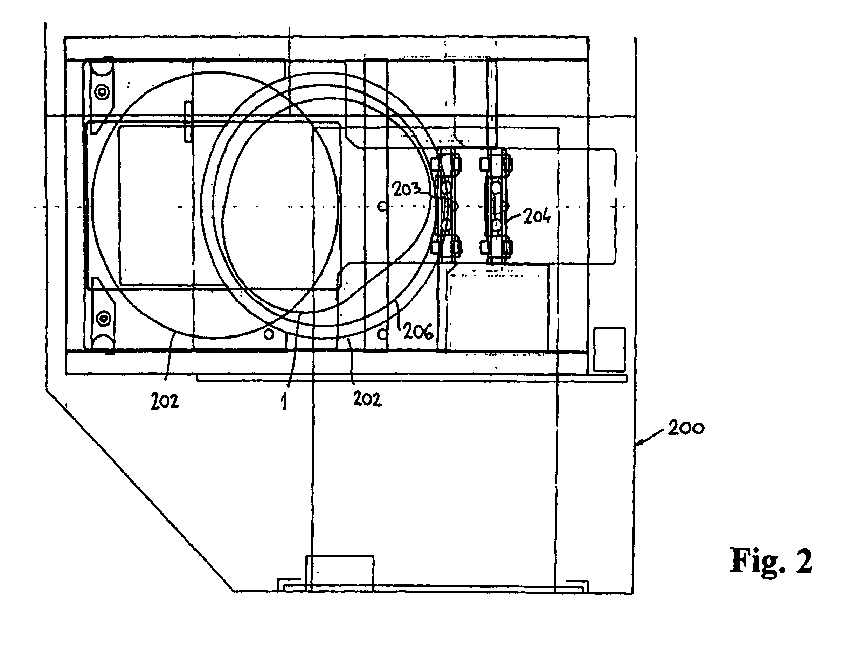

The cover 201 comprises an antenna 205, while another antenna 206 is placed inside the housing 200 in the area of the pallet 202 (on the right side with respect to Fig. 2). The last mentioned antenna 206 is annular or circular antenna which is attached to the said pallet 202, Moreover, in the Fig. 2 also the bracelet 1 is shown, which is however illustrated just symbolically by means of a curved ring.

As soon as the bracelet 1 is brought from outside (e.g. from the left side in accordance to Fig. 1 adjacent to the cover 201 of the feeder, appropriate signal from the bracelet 1 is received and detected by the antenna 205. This leads to actuating the motors 203, 204. The first motor 203 opens the cover 201 and moves it in a direction towards the right according to Fig. 1. Another motor 204 moves the pallet 202 in appropriate direction (towards the left according to Fig. 1). In such a state the cover 201 is therefore opened, so that the bracelet 1 can be put into the housing 200 namely on the pallet 202. After that the motor 203 is actuated again in order to return to its original position and close herewith the cover 201. Identification of the bracelet 1 is executed by means of antenna 205, and upon moving the pallet 202 towards corresponding reader also reading of the information available on bracelet 1 is possible, whereupon thanks to pivotable bottom 2020 of the pallet 202 the bracelet 1 is stored into appropriate container, which is also not shown.

Synchronized actuating of the pallet 202 and the cover 201 makes removing the bracelet 1 from the pallet 202 during reading appropriate information thereon quite impossible. Moreover, the pivotable bottom 2020 is conceived in such a manner that when inserting any other objects except the bracelet of strictly defined dimensions and weight, the bottom is turned over immediately in order to refuse such an object and to direct it into another container.

It is therefore obvious that the feeder for feeding the bracelets or attaching requisites and transferring them to appropriate reading unit therefore in fact ensures one-way deposition and appropriate positioning the bracelets or similar annular requisites and thereafter also reliable reading the electronic data thereon.

## Claims

1. Feeding device with a housing (200) for transferring identification bracelets (1) or similar annular attaching requisites equipped with electronic data carriers to a unit for reading said data, said housing comprising a slidable cover (201) driven by a first motor (203) and a pallet (202) movable by means of a second motor (204), said cover being equipped with an antenna (205) for receiving a signal from the identification bracelet when it is brought into the vicinity of said housing, thereby actuating said first and second motors to open the cover and to enable placement of said bracelet on said pallet, whereby said pallet moves said bracelet to a reader for reading the information available on said bracelet after said first motor has brought said cover back to its closed state, and whereby said pallet is equipped with a movable, preferably pivotable bottom (2020), thanks to which said bracelet can be stored into a container.

2. Feeding device according to Claim 1, **characterized in that** the motors (203, 204) for moving the cover (201 ) and the pallet (202) are electrically connected to each other in order to achieve their synchronized actuating by a further antenna (206).

3. Feeding device according to Claim 1 or 2, **characterized in that** the further antenna (206) for detecting the identification bracelet (1) within the housing (200) is attached to the pallet (202).

## Patentansprüche

1. Zuführvorrichtung mit einem Gehäuse (200) zum Heranführen von mit elektronischen Datenträgern ausgestatteten Identifikationsarmbändern (1) oder ähnlichen anzulegenden ringförmigen Artikeln an eine Leseeinheit zum Auslesen dieser Daten, wobei das Gehäuse einen durch einen ersten Motor (203) angetriebenen verschiebbaren Deckel (201) und eine mittels eines zweiten Motors (204) bewegbaren Werkstückträger (202) aufweist, wobei der Deckel mit einer Antenne (205) ausgerüstet ist, welche ein von dem in die Nähe des Gehäuses gebrachten Identifikationsarmband ausgehendes Signal empfängt, wodurch der erste und der zweite Motor betätigt werden, so dass der Deckel geöffnet wird und das Armband auf den Werkstückträger gelegt werden kann, wobei der Werkstückträger das Armband an ein Lesegerät heranführt, das die auf dem Armband verfügbare Information ausliest, nachdem der erste Motor den Deckel in seinen geschlossenen Zustand zurückgebracht hat, und wobei der Werkstückträger mit einem beweglichen, vorzugsweise schwenkbaren Boden (2020) ausgestattet ist, über welchen das Armband zur Lagerung in einen Behälter gegeben werden kann.

2. Zuführvorrichtung nach Anspruch 1, **dadurch gekennzeichnet, dass** die Motoren (203, 204) zum Bewegen des Deckels (201) und des Werkstückträgers (202) elektrisch untereinander verbunden sind, so dass sie über eine weitere Antenne (206) gleichzeitig betätigt werden.

3. Zuführvorrichtung nach Anspruch 1 oder 2, **dadurch gekennzeichnet, dass** die weitere Antenne (206) zur Erfassung des Identifikationsarmbands (1) innerhalb des Gehäuses (200) an dem Werkstückträger (202) angebracht ist.

## Revendications

1. Dispositif d'amenée avec un boîtier (200) pour acheminer des bracelets d'identification (1), ou des objets annulaires similaires destinés à être attachés, équipés de supports de données électroniques à une unité de lecture des données, le boîtier comportant un couvercle coulissant (201) entraîné par un premier moteur (203) et une palette (202) déplaçable au moyen d'un deuxième moteur (204), le couvercle étant équipé d'une antenne (205) destinée à recevoir un signal provenant du bracelet d'identification lorsque celui-ci est amené à proximité du boîtier, les premier et deuxième moteurs étant de ce fait actionnés, ouvrant le couvercle et autorisant le placement du bracelet sur la palette, la palette acheminant le bracelet vers un lecteur destiné à lire l'information mise à disposition par le bracelet après que le premier moteur a ramené le couvercle dans son état fermé et la palette étant équipée d'un fond (2020) mobile, de préférence pivotant, grâce auquel le bracelet peut être entreposé dans un contenant.

2. Dispositif d'amenée selon la revendication 1, **caractérisé en ce que** les moteurs (203, 204) destinés à faire coulisser le couvercle (201) et la palette (202) sont électriquement reliés afin d'obtenir leur actionnement simultané par le biais d'une antenne supplémentaire (206).

3. Dispositif d'amenée selon la revendication 1 ou 2, **caractérisé en ce que** l'antenne supplémentaire (206) destinée à détecter le bracelet d'identification (1) au sein du boîtier (200) est attachée à la palette (202).
